# NEUE EUROPÄISCHE PATENTSCHRIFT

(11) **EP 2 094 370 B2**
(45) Veröffentlichungstag und Bekanntmachung des Hinweises auf die Entscheidung über den Einspruch: **08.09.2021**
(45) Hinweis auf die Patenterteilung: 14.05.2014
(21) Anmeldenummer: 07857207.0
(22) Anmeldetag: 09.11.2007
(51) Int. Cl.: B01D 46/00, B01D 46/10, B01D 46/52

(54) **FILTERMODUL MIT EINEM KOMPRESSIBLEN UND SELBSTAUSDEHNENDEN FILTERELEMENT, UND VERFAHREN**
FILTER MODULE COMPRISING A COMPRESSIBLE AND SELF-EXPANDING FILTER ELEMENT, AND METHOD
MODULE FILTRANT À ÉLÉMENT FILTRANT COMPRESSIBLE, ET PROCÉDÉ CORRESPONDANTS

(30) Priorität: 09.11.2006 DE 202006017226 U
(43) Veröffentlichungstag der Anmeldung: 02.09.2009
(73) Patentinhaber: MANN+HUMMEL GmbH, 71636 Ludwigsburg (DE)
(72) Erfinder: VOLKMER, Daniel, 71282 Hemmingen (DE); AUER, Harald, 94363 Oberschneiding (DE); SCOPE, Andreas, 09600 Oberschöna (DE)
(74) Vertreter: Mann + Hummel Intellectual Property
(86) Internationale Anmeldenummer: PCT/EP2007/062122
(87) Internationale Veröffentlichungsnummer: WO 2008/055971

(56) Entgegenhaltungen:
- EP-A- 1 616 736
- WO-A-99/43413
- WO-A-03/031025
- WO-A-2005/065803
- WO-A-2005/074468
- US-A- 3 040 501
- US-A- 4 976 857
- US-A1- 2003 230 061

## Beschreibung

Die vorliegende Erfindung bezieht sich auf ein Filtermodul mit einem Filterelement, wobei das Filtermodul einen Aufnahmeraum mit einer Zugangsöffnung aufweist, durch die das Filterelement in den Aufnahmeraum eingeführt werden kann. Die Erfindung bezieht sich ferner auf ein Verfahren zum Befestigen eines Filterelements in einem solchen Filtermodul.

### Technischer Hintergrund der Erfindung

Ein Filterelement dient allgemein der Filtration von beispielsweise Fluid-Strömungen oder gasförmigen Medien, wie Luftströmungen, die beispielsweise dem Fahrzeuginnenraum eines Kraftfahrzeugs zugeführt werden. Neben Kraftfahrzeugen können Filter auch auf vielen anderen Gebieten eingesetzt werden, wie beispielsweise für Klimaanlagen und Belüftungssysteme in Gebäuden.

Die Wirksamkeit eines Filters hängt insbesondere von der Größe der von der Luft durchströmten Oberfläche des Filters ab. Daher werden bei Kfz-Innenraumluftfiltern überwiegend zick-zack-förmig gefaltete Filter verwendet. Durch eine solche Faltung kann auf diese Weise, abhängig von der Faltungshöhe und dem Faltungsabstand der verschiedenen Faltenabschnitte des Filters, eine effektive Vergrößerung der von dem Luftstrom durchströmten Filterfläche erzielt werden.

Ein Filterelement, das beispielsweise als Kfz-Innenraum-Luftfilter eingesetzt wird, dient dazu, die von außen in den Innenraum des Fahrzeugs geleitete und aufbereitete Luft mittels eines geeigneten Filters zu filtern. Dabei kommen beispielsweise Partikel- oder Geruchsfilter zum Einsatz oder Kombinationen davon, welche die in der Luft enthaltenen Partikel und inhärente Gerüche aus der Umgebungsluft herausfiltern. Bei den Kfz-Innenraum-Luftfiltern ergibt sich dabei das Problem, dass der zugehörige Aufnahmeraum einer fahrzeugeigenen Filteraufnahme häufig nur schwer zugänglich ist, so sind Filteraufnahmen beispielsweise im Fußraum des Fahrers oder des Beifahrers angeordnet.

Aus dem Stand der Technik, wie er beispielsweise in der DE 103 20 260 A1 offenbart ist, ist ein Filtersystem bekannt, mit einem Filterelement, das in einer Filteraufnahme aufgenommen ist. Das Filterelement besteht dabei aus wenigstens zwei Filterelementen, die aneinander abdichtend in der Filteraufnahme angeordnet werden. Die Filterelemente weisen dabei jeweils einen plissierten Faltenpack auf, der an seinen beiden einander gegenüberliegenden Längsseiten, sowie an seinen beiden stirnseitigen Endflächen umlaufend abdichtend mit einem Rahmenelement versehen ist. Die Filteraufnahme weist eine Zugangsöffnung auf, zum Einführen der Filterelemente. Die Querschnittsabmessungen eines einzelnen Filterelements sind dabei an die lichten Abmessungen der Zugangsöffnung derart angepasst, dass das Filterelement nicht größer als die Zugangsöffnung ist. Hierdurch kann ein Filterelement nach dem anderen durch die Zugangsöffnung in den Filteraufnahmeraum eingeschoben werden. Die Filterelemente können dabei in dem Aufnahmeraum nebeneinander angeordnet werden, um diesen auszufüllen.

Dies hat jedoch den Nachteil, dass die Filterelemente in ihren Abmessungen und in ihrer Anzahl an den jeweiligen Aufnahmeraum und dessen Zugangsöffnung individuell angepasst werden müssen, um diesen vollständig auszufüllen. Dies führt zu einem erheblichen Herstellungsaufwand und damit verbundenen Kosten insbesondere dann, wenn die Zugangsöffnung im Verhältnis zu der Größe des Aufnahmeraums verhältnismäßig klein ist. Durch das Vorsehen von mehreren aneinander anliegenden Filterelementen können zudem Undichtigkeiten im Bereich dieser Anlageflächen entstehen, die mit steigender Anzahl der Filterelemente zunehmen. Die Filterelemente müssen daher jeweils mit einem zusätzlichen Rahmenelement versehnen werden, so dass die Filterelemente mehr oder weniger abdichtend aneinander anliegen. Dieses ist jedoch ebenfalls mit einem zusätzlichen Herstellungsaufwand und Kosten verbunden. Ein weiterer Nachteil ist, dass die Filterelemente nicht für verschiedene Anwendungen einsetzbar sind, so dass die Gefahr besteht, dass ein falsches Filterelemente eingebaut wird. Eine weitere Gefahr besteht darin, dass im Service ein Filterelement vergessen wird einzubauen.

Aus der EP 1 616 736 A1 ist ein Faltenfiltereinsatz, insbesondere für Zuluftfilter von Fahrzeuginnenräumen, bekannt, welcher einen Faltenfilter mit quer zu seiner Längsrichtung liegenden Falten aufweist. Der Faltenfilter ist an mindestens einer quer zur Längsrichtung verlaufenden Stirnseite mit einem Rahmenelement versehen. Das Rahmenelement ist gummielastisch und erlaubt die Verformung des Faltenfilters beim Einbau, sodass der Faltenfilter durch eine Öffnung gesteckt werden kann, die kleiner ist als der Querschnitt des unverformten Faltenfilters.

Aus der US 4 976 857 A ist ein Filterelement und ein Verfahren zu dessen Herstellung bekannt, bei dem ein in elliptische Form zusammengedrücktes, gefaltetes Filtermedium in einen ebenfalls zusammengedrückten, elastischen Rahmen eingebracht wird und durch entspannen des Filtermediums und des Rahmens das Filtermedium im Rahmen fixiert wird.

Aus der WO 2005/074468 A sind verschiedene Varianten eines zusammenfaltbaren Filterelements bekannt, das zur Verwendung aus einer zusammengefalteten Konfiguration in eine Filterelementkonfiguration mit einem gefalteten Medium auseinandergeklappt werden kann.

Aus der WO 99/43413 A ist ein Filterelement bekannt, bei dem ein Faltenbalg mit Hilfe eines Drückers in der Arbeitsposition auseinandergezogen werden kann.

Aus der WO 2005/065803 A ist ein Filterelement bekannt, bei dem ein zusammendrückbarer und auseinanderziehbarer Faltenbalg in einen Rahmen eingelegt wird.

Es besteht daher ein Bedarf, ein Filtermodul bereitzustellen, indem ein Filterelement in einen Aufnahmeraum des Filtermoduls eingeführt werden kann, der eine Zugangsöffnung mit einem kleineren Querschnitt als das Filterelement aufweist.

Zusätzlich besteht ein Bedarf daran, dass ein solches Filtermodul einfach und preisgünstig in der Herstellung ist.

### Aufgabenstellung

Vor diesem Hintergrund liegt der vorliegenden Erfindung die Aufgabe zugrunde, ein Filtermodul mit einem Filterelement bereitzustellen, bei dem das Filterelement einen größeren Querschnitt als eine Zugangsöffnung zum Aufnahmeraum des Filtermoduls aufweist, indem das Filterelement aufgenommen wird.

### Zusammenfassung und Vorteile der Erfindung

Erfindungsgemäß wird die oben genannte Aufgabe durch ein Filtermodul mit einem Filterelement mit den Merkmalen des Patentanspruchs 1 und/oder durch ein Verfahren mit den Merkmalen des Patentanspruchs 7 gelöst.

Die der vorliegenden Erfindung zugrunde liegende Idee besteht darin, ein Filtermodul mit einem Aufnahmeraum für ein Filterelement bereitzustellen, wobei das Filterelement so stark komprimiert werden kann, dass es durch eine (deutlich) kleinere Zugangsöffnung in den Aufnahmeraum eingeführt werden kann. Das Filterelement ist zudem entsprechend elastisch, so dass es sich in eingebautem Zustand (nachdem es nicht mehr komprimiert wird) wieder ausdehnen und vorzugsweise in seinen Ursprungszustand zurückkehren kann.

Auf diese Weise ist es möglich, dass das Filterelement im Ganzen durch eine im Vergleich dazu kleinere Zugangsöffnung in den Aufnahmeraum eingeführt werden kann. Das Filterelement kann sich in dem Aufnahmeraum wieder ausdehnen, nachdem es nicht mehr komprimiert wird. Dadurch ist die Größe des Filterelements unabhängig von der Größe der Zugangsöffnung und kann daher auch einen entsprechend großen Aufnahmeraum hinter der Zugangsöffnung allein ausfüllen, ohne dass zusätzliche Filterelemente nötig sind. Dies erleichtert zudem die Montage. Des Weiteren lässt sich auch die Dichtigkeit verbessern, da das Filterelement nur mit seiner Außenkontur an der Innenkontur des Aufnahmeraums dichtanliegen muss, im Gegensatz dazu, wenn mehrere Filterelemente verwendet werden. Darüber hinaus ist ein solches Filterelement leicht herzustellen und vergleichsweise kostengünstig.

Vorteilhafte Ausgestaltungen und Weiterbildungen der Erfindung ergeben sich aus den weiteren Unteransprüchen sowie aus der Beschreibung in Zusammenschau mit den Zeichnungen.

In einer vorteilhaften Ausgestaltung ist das Filterelement in der Längs- oder Breitenrichtung oder in der Querrichtung komprimierbar. Grundsätzlich ist aber auch denkbar, dass das Filterelement nicht nur in einer Richtung sondern in zwei oder drei der vorgenannten Richtungen komprimierbar ist. Dadurch kann das Filterelement entsprechend dem Querschnitt einer kleineren Zugangsöffnung komprimiert werden.

In einer bevorzugten Ausgestaltung kann das Filterelementan dem Innenumfang des Aufnahmeraums zumindest teilweise oder vollumfänglich dicht anliegen, je nach den Anforderungen, die an das Filterelement gestellt werden.

Der Filter des Filterelements kann nicht nur entlang seiner Längsrichtung oder Breitenrichtung zick-zack-förmig bzw. ziehharmonikaförmig oder wellenförmig gefaltet sein, sondern auch in der Diagonale. Dadurch ergeben sich weitere Möglichkeiten für die Montage und das spätere Ersetzen des Filterelements.

In der Erfindung ist ein Band an dem Filterelemente zum Entfernen desselben aus dem Aufnahmeraum des Filtermoduls vorgesehen. Dies hat den Vorteil, dass der Demontageaufwänd erheblich reduziert werden kann, da das Filterelement durch das Band sehr einfach aus dem Aufnahmeraum herausgezogen werden kann. Das Band bildet hierzu vorzugsweise eine Lasche oder eine Schlaufe, die greifbar in der Zugangsöffnung angeordnet ist.

Das Band kann hierbei wahlweise an der jeweiligen Längsseite, Breitenseite oder Diagonalen des Filters befestigt sein oder an jeder anderen Stelle an dem Filter, die ein Entfernen des Filterelements aus dem Aufnahmeraum ermöglicht. Das Band kann dabei auch quer oder längs zu der Faltrichtung des Filters an dessen Vorder- oder Rückseite befestigt sein.

Typischerweise ist das Band mittels eines Klebstoffs an dem Filter befestigt, beispielsweise mittels eins Hotmeltklebers. Alternativ oder zusätzlich kann das Band aber auch durch entsprechende Öffnungen in dem Filterelement hindurchgeführt werden.

Die Breite des Bandes kann abhängig von seinem Einsatzzweck kleiner, gleich oder größer als die Breite der Längsseite bzw. Breitenseite des Filters gewählt werden. Das Band kann dabei seitlich leicht über die Kanten der Längs- und/oder Breitenseite des Filters überstehen. Dies hat den Vorteil, dass das Filterelement durch das überstehende Band insbesondere beim Einbau des Filterelements, aber auch beim späteren Einsatz geschützt ist, was insbesondere bei sehr großflächigen Filterelementen von besonderem Vorteil ist.

Das erfindungsgemäße Filtermodul weist einen Aufnahmeraum auf, der beispielsweise einen viereckigen oder mehreckigen, runden oder ovalen Querschnitt aufweisen kann. In einer bevorzugten Ausführungsform kann das Filterelement entsprechend dem Querschnitt des Aufnahmeraums angepasst sein und daher ebenfalls einen viereckigen oder mehreckigen, runden oder ovalen Querschnitt aufweisen. Auf diese Weise wird das Filterelement optimal an den Aufnahmeraum des Filtermoduls angepasst und kann an dessen Innenumfangsfläche vorzugsweise dicht anliegen.

In einer Ausgestaltung ist der Filter ein Geruchs- oder. Partikelfilter oder eine Kombination davon.

In einer Ausgestaltung des erfindungsgemäßen Verfahrens weist das Filterelement einen Filter mit einer zickzackförmigen bzw. ziehharmonikaförmigen und/oder wellenförmigen Faltung in Längsrichtung oder Breitenrichtung oder Diagonalrichtung auf, wobei das Filterelement quer zu der Faltrichtung komprimiert wird, um durch die Zugangsöffnung in das Filtermodul eingeführt zu werden. Vorzugsweise werden im Anschluss an den Schritt des Komprimierens des Filterelements quer zur Faltrichtung, beide Enden des Filterelements aufeinander gefaltet, um das Filterelement durch die Zugangsöffnung in das Filtermodul einzuführen:

In einer bevorzugten Weiterbildung wird das Filterelement zum Entfernen aus dem Aufnahmeraum des Filtermoduls zumindest teilweise quer und/oder längs zur Faltrichtung komprimiert. Dabei können die Enden des Filterelements, zum Entfernen aus dem Aufnahmeraum, zusätzlich aufeinander gefaltet werden.

In einer ebenfalls bevorzugten Weiterbildung zum Komprimieren und/oder Ausdehnen des Filterelements ist zusätzlich wenigstens ein Band an dem Filterelement vorgesehen, mittels dem das Filterelement komprimiert wird.

### Inhaltsangabe der Zeichnung

Die Erfindung wird nachfolgend anhand der in den Figuren der Zeichnung angegebenen Ausführungsbeispiele erläutert. Dabei zeigen:
- Fig. 1: eine schematische Perspektivansicht einer ersten Ausführungsform eines Filterelements für ein Filtermodul gemäß der Erfindung,
- Fig. 2: eine schematische Perspektivansicht eines Aufnahmeraums eines erfindungsgemäßen Filtermoduls mit einer Zugangsöffnung und dem Filterelement in eingebautem Zustand;
- Fig. 3: eine schematische Querschnittansicht einer zweiten Ausführungsform eines Filterelements, wobei das Filterelement in einem komprimierten Zustand dargestellt ist, wie es in eine Zugangsöffnung eines Aufnahmeraums eines Filtermoduls eingeführt wird;
- Fig. 4: eine schematische Querschnittansicht des erfindungsgemäßen Filtermoduls, wobei das Filterelement gemäß Fig. 3 in den Aufnahmeraum eingebaut ist;
- Fig. 5: das Filtermodul gemäß Fig. 4, wobei das Filterelement aus dem Aufnahmeraum entfernt wird;
- Fig. 6: eine perspektivische Ansicht einer Halterung für das Filterelement gemäß Fig. 3;
- Fig. 7: eine schematische Querschnittansicht einer dritten Ausführungsform des Filterelements, wobei das Filterelement in einem komprimierten Zustand dargestellt ist, wie es in eine Zugangsöffnung eines Aufnahmeraums eines Filtermoduls eingeführt wird;
- Fig. 8: eine schematische Querschnittansicht des erfindungsgemäßen Filtermoduls, wobei sich das Filterelement gemäß Fig. 7 nach Wegfall einer Kompressionskraft innerhalb des Aufnahmeraums ausdehnt;
- Fig. 9: das Filtermodul gemäß Fig. 8, wobei das Filterelement aus dem Aufnahmeraum entfernt wird;
- Fig. 10: eine schematische Querschnittansicht einer vierten Ausführungsform des Filterelements, wobei das Filterelement in einem komprimierten Zustand dargestellt ist, wie es in eine Zugangsöffnung eines Aufnahmeraums eines Filtermoduls eingeführt wird;
- Fig. 11: eine schematische Querschnittansicht des erfindungsgemäßen Filtermoduls, wobei das Filterelement gemäß Fig. 10 in eingebautem Zustand gezeigt ist;
- Fig. 12: das Filtermodul gemäß Fig. 11, wobei das Filterelement aus dem Aufnahmeraum entfernt wird;
- Fig. 13: eine schematische Querschnittansicht einer fünften Ausführungsform des Filterelements für ein Filtermodul gemäß der Erfindung,
- Fig. 14: eine schematische Querschnittansicht des erfindungsgemäßen Filtermoduls, wobei das Filterelement gemäß Fig. 13 sich innerhalb des Aufnahmeraums ausdehnt; und
- Fig. 15: das Filtermodul gemäß Fig. 14, wobei das Filterelement aus dem Aufnahmeraum entfernt wird.

In den Figuren der Zeichnung sind gleiche und funktionsgleiche Komponenten, Elemente und Merkmale - sofern nichts Anderes angegeben ist - mit denselben Bezugszeichen versehen worden.

### Beschreibung von Ausführungsbeispielen der Erfindung

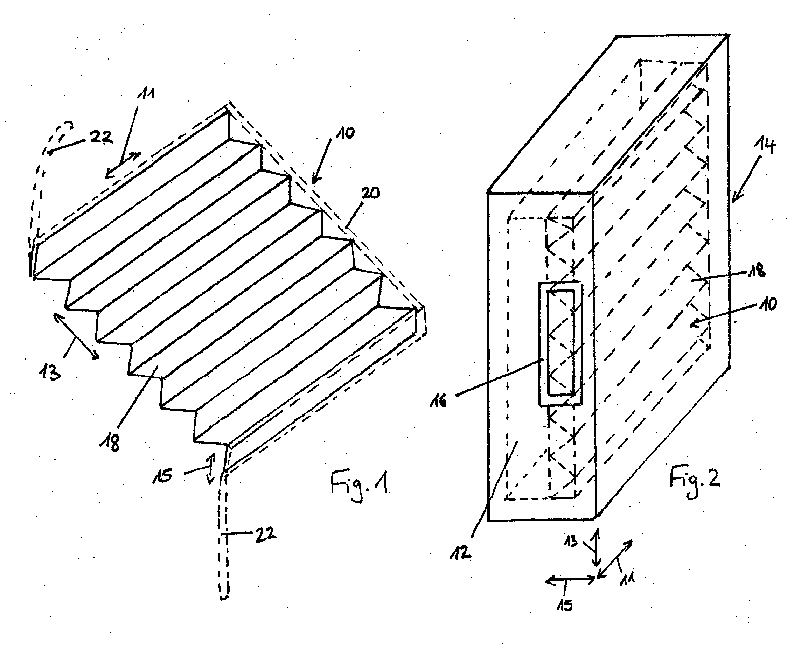

Fig. 1 zeigt eine perspektivische Ansicht einer ersten Ausführungsform eines Filterelements eines Filtermoduls gemäß der Erfindung. Das Filterelement ist in Fig. 1 mit dem Bezugszeichen 10 bezeichnet. Es sei angenommen, dass das Filterelement 10 hier als Luftfilter und insbesondere als Kfz-Innenraumluftfilter ausgebildet ist.

Das Filterelement 10 ist dabei in seinem Ursprungszustand gezeigt, bevor es komprimiert wird, um in einen Aufnahmeraum 12 des Filtermoduls 14 eingeführt zu werden. Das Filterelement 10 weist dabei in seinem Ursprungszustand einen größeren Querschnitt auf, als eine Zugangsöffnung 16 des Aufnahmeraums 12, wie in Fig. 2 gezeigt ist.

Das Filterelement 10 enthält einen Filter 18, beispielsweise einen Geruchs- und/oder Partikelfilter, der zick-zack-förmig oder ziehharmonikaförmig gefaltet ist. Der Filter 18 kann aber auch beispielsweise wellenförmig gefaltet sein (nicht dargestellt). Um in die kleinere Zugangsöffnung 16 eingeführt zu werden, ist das Filterelement 10 bzw. sein Filter 18 ausreichend komprimierbar in seiner Längsrichtung 11 und/oder Breitenrichtung 13 und/oder Querrichtung 15 ausgebildet. Das Filterelement 10 bzw. sein Filter 18 ist außerdem geeignet elastisch ausgebildet, so dass es bzw. er sich nach dem Wegfall einer Kompressionskraft wieder ausdehnt, um zumindest teilweise oder vollständig in seinen Ursprungszustand zurückzukehren.

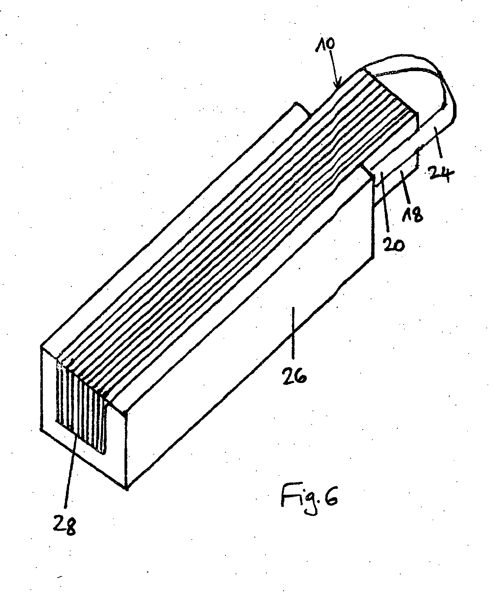

An wenigstens einer Seite des Filters 18 oder beispielsweise an drei Seiten, wie in Fig. 1 gezeigt ist, kann wahlweise zusätzlich wenigstens ein Band 20 befestigt sein. Das Band 20 ist dabei mit gestrichelten Linien in Fig. 1 eingezeichnet. Erfindungsgemäß ist das Band 20 flexibel und/oder elastisch ausgebildet. Des Weiteren kann das Band 20 dieselbe Breite wie die Längs- bzw. Breitenseite des Filters 18 aufweisen, wie in Fig. 1 gezeigt ist, oder eine Breite die größer oder kleiner ist, wie in Fig. 6 gezeigt ist.

Das Band 20 kann vorzugsweise derart an dem Filter 18 befestigt werden, dass es wenigstens eine Lasche 22 und/oder eine Schlaufe 24 bildet, um das Entfernen des Filterelements 10 aus dem Aufnahmeraum 12 zu erleichtern. Das Band 20 kann dabei, zur vorzugsweise dichtenden Verbindung mit dem Filter 18, mittels eines Klebestoffs wie einem Heißkleber, beispielsweise einem Hotmeltkleber, an diesem befestigt werden. Typischerweise ist das Band 20 zumindest an den gefalteten Kanten des Filters 18 mittels des Klebestoffs befestigt.

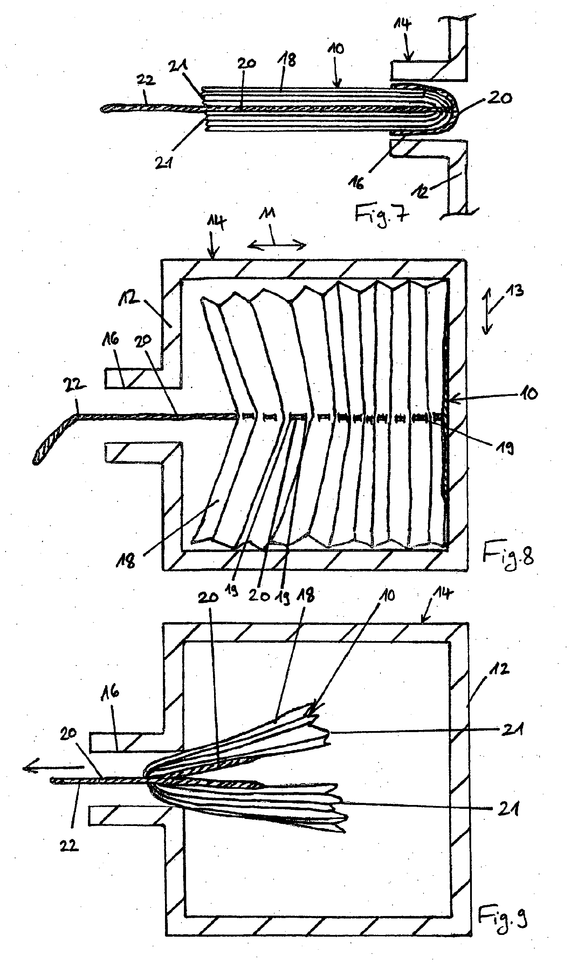

Alternativ kann das Band 20 aber auch, wie im nachfolgenden noch mit Bezug auf die Fig. 7 bis 15 näher erläutert wird, durch Öffnungen 19 in dem Filter 18 hindurchgeführt werden. Um die vollkommene Dichtheit des Filters 18 in dem Bereich der Öffnungen 19 zu gewährleisten, können die Öffnungen 19 von zumindest einer Seite zusätzlich abgedichtet werden. Dabei kann beispielsweise zusätzlich ein Streifen Filtermaterial (nicht dargestellt) oder ein anderes geeignetes Material (nicht dargestellt) auf die Faltung des Filters 18 so aufgeklebt werden, dass unter dem Streifen das Band 20 verläuft, wobei das Band 20, wie in den Fig. 8, 11, 12 und 14 gezeigt ist, zusammengezogen werden kann.

In Fig. 2 ist beispielhaft ein erfindungsgemäßes Filtermodul 14 mit eingebautem Filterelement 10 schematisch dargestellt. Eine Ein- und Auslassöffnung auf der Vorder- und Rückseite des Filtermoduls 14 zur Durchleitung von zu filternder Luft wurde aus Gründen der Übersichtlichkeit weggelassen, ebenso das Band zum späteren Entfernen des Filterelements 10. Wie aus Fig. 2 entnommen werden kann, muss das Filterelement 10, um durch die kleinere Zugangsöffnung 16 eingeführt zu werden, zuerst ausreichend in der Breitenrichtung 13 und der Querrichtung 15 komprimiert werden. Das Filterelement 10 dehnt sich anschließend, nach Wegfall der Kompressionskraft, aufgrund seiner Elastizität in dem Aufnahmeraum 12 wieder aus. Der Aufnahmeraum 12 im Inneren des Filtermoduls 14 und das eingebaute Filterelement 10 sind dabei jeweils mit gestrichelten Linien eingezeichnet.

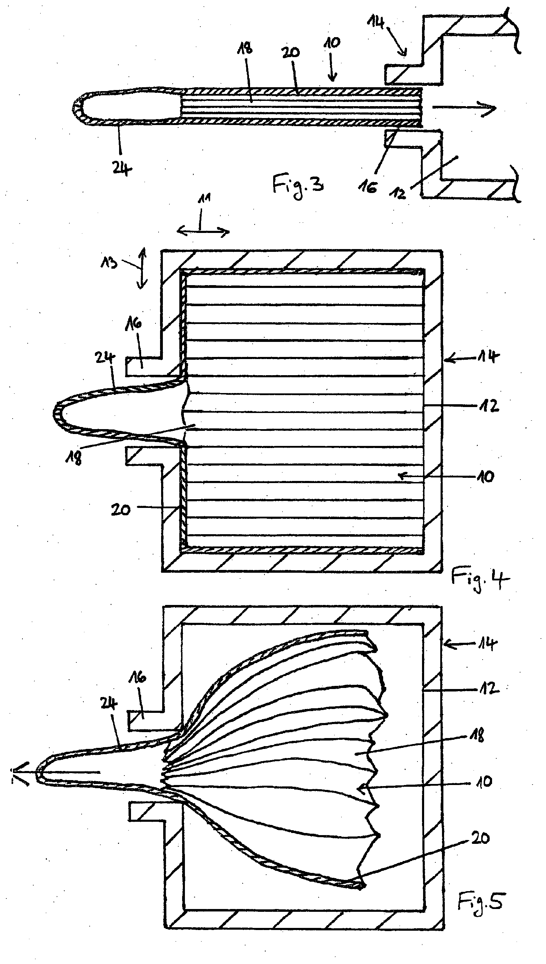

In Fig. 3 ist eine zweite Ausführungsform des Filterelements 10 dargestellt. Dabei ist das Band 20 an den Längsseiten des Filterelements 10 angebracht und bildet an einem Ende eine Schlaufe 24. Das Band 20 kann dabei auch lediglich an einem Abschnitt der entsprechenden Längsseite des Filters 18 angebracht sein. Der Filter 18 des Filterelements 10 weist eine zickzackförmige Faltung in seiner Längsrichtung 11 auf. Zum Einführen wird das Filterelement 10 zunächst in der Breitenrichtung 13 komprimiert, so dass es in die Zugangsöffnung 16 in Pfeilrichtung eingeführt und in den Aufnahmeraum 12 eingeschoben werden kann. In dem Fall, dass an dem Filterelement 10, wie in Fig. 3 dargestellt, ein zusätzliches Band 20 vorgesehen ist, wird das Filterelement 10 derart in den Aufnahmeraum 12 eingeschoben, dass das Band 20 bzw. seine Schlaufe 24 sich vorzugsweise im Bereich der Zugangsöffnung 16 greifbar befinden.

In Fig. 4 ist das erfindungsgemäße Filtermodul 14 mit eingebautem Filterelement 10 dargestellt. Dabei entfaltet sich das Filterelement 10 aufgrund seiner Elastizität bzw. dehnt sich aus, nachdem es in den Aufnahmeraum 12 eingeführt ist und die Kompressionskraft wegfällt. Das Filterelement 10 ist, abhängig von seinem Einsatzzweck, vorzugsweise so bemessen, dass es in eingebautem Zustand zumindest teilweise oder vollumfänglich an dem Innenumfang des Aufnahmeraums 12 anliegt, vorzugsweise dicht anliegt. Dies gilt für alle Ausführungsformen.

Fig. 5 zeigt das Filtermodul 14, wobei das Filterelement 10 aus dem Aufnahmeraum 12 entfernt wird, um es beispielsweise gegen ein neues Filterelement 10 auszutauschen. Dabei wird an der Schlaufe 24 des Bandes 20 in Pfeilrichtung gezogen, wobei sich das Filterelement 10 zusammenfaltet bzw. zusammengedrückt wird und durch die Zugangsöffnung 16 leicht herausgezogen werden kann. Grundsätzlich kann neben der Zugangsöffnung 16 wenigstens eine weitere zweite Öffnung bzw. Entnahmeöffnung (nicht dargestellt) vorgesehen sein, durch die das Filterelemente 10 entnommen werden kann. Das Filterelement 10 mit seinem Band 20 wird vorzugsweise so in dem Aufnahmeraum 12 angeordnet, dass eine Schlaufe 24 oder Lasche 22 des Bandes 20 leicht durch die jeweilige Öffnung ergriffen und herausgezogen werden kann.

Wie in Fig. 6 gezeigt, kann wahlweise eine zusätzliche Halterung 26 bzw. Kompressionshilfe vorgesehen werden, um das Halten des Filterelements 10 in einem komprimierten Zustand zu erleichtern. Die Halterung 26 weist dabei eine Aufnahme 28 auf, in die das komprimierte Filterelement 10 eingeführt wird. Die Aufnahme 28 kann hierzu entsprechend dem Filterelement 10 beispielsweise einen U-förmigen Querschnitt aufweisen und sich zumindest entlang eines Abschnitts des Filterelements 10 erstrecken. Dies hat den Vorteil, dass insbesondere verhältnismäßig lange Filterelemente 10 problemlos in einem komprimierten Zustand gehalten werden können. Durch Anlegen bzw. Ansetzen der Halterung 26 an die Zugangsöffnung 16 der Aufnahmekammer 12 kann zudem das Filterelement 10 leichter in die Zugangsöffnung 16 eingeführt werden. Das Filterelement 10 wird dabei von der Halterung 26 aus direkt in die Zugangsöffnung 16 eingeschoben.

In Fig. 7 ist eine dritte Ausführungsform des Filterelements 10 dargestellt. Das Filterelement 10 bzw. sein Filter 18 ist dabei in der Breitenrichtung 13 gefaltet, d.h. die Falten verlaufen entlang der Breitenrichtung 13. Dabei ist zumindest ein Band 20 vorgesehen, das durch das Filterelement 10 quer zu dessen Faltung verläuft. Das Band 20 ist dabei an einer Breitenseite des Filterelements 10 befestigt und verläuft durch entsprechende Öffnungen 19 in dem Filterelement 10 zur gegenüberliegenden Breitenseite des Filterelements 10, wie in Fig. 7 bis 9 gezeigt ist. Alternativ kann das Band 20 stattdessen zumindest abschnittweise auf die Faltung des Filters 18 aufgeklebt werden (nicht dargestellt). Wie in Fig. 7 gezeigt ist, wird das Filterelement 10 zunächst entlang seiner Faltung in Längsrichtung 11 komprimiert und anschließend mit seinen beiden Enden 21 aufeinander gefaltet, so dass es mit seinem geschlossenen Ende in die Zugangsöffnung 16 des Aufnahmeraums 12 eingeführt werden kann.

Fig. 8 zeigt das erfindungsgemäße Filtermodul 14, wobei sich das Filterelement 10 aufgrund seiner Elastizität in dem Aufnahmeraum 12 ausdehnt bzw. auseinanderfaltet, nachdem die Kompressionskraft wegfällt. Die Faltung des Filterelements 10 dehnt sich dabei in Längsrichtung 11 entlang des Bandes 20 soweit aus, dass das Filterelement 10 in eingebautem Zustand an dem Innenumfang des Aufnahmeraums 12 anliegt, beispielsweise dicht anliegt. Das Band 20 bildet dabei an seinem einen Ende eine Lasche 22, die so angeordnet ist; dass sie von der Seite der Zugangsöffnung 16 aus leicht ergriffen werden kann.

In Fig. 9 ist das erfindungsgemäße Filtermodul 14 dargestellt, wobei das Filterelement 10 aus dem Aufnahmeraum 12 entfernt wird. Hierzu wird an der Lasche 22 in Pfeilrichtung gezogen. Dabei wird das Filterelement 10 zusammengedrückt und die beiden Enden 21 des Filterelements 10 aufeinander gefaltet, so dass es leicht aus der Zugangsöffnung 16 entfernt werden kann.

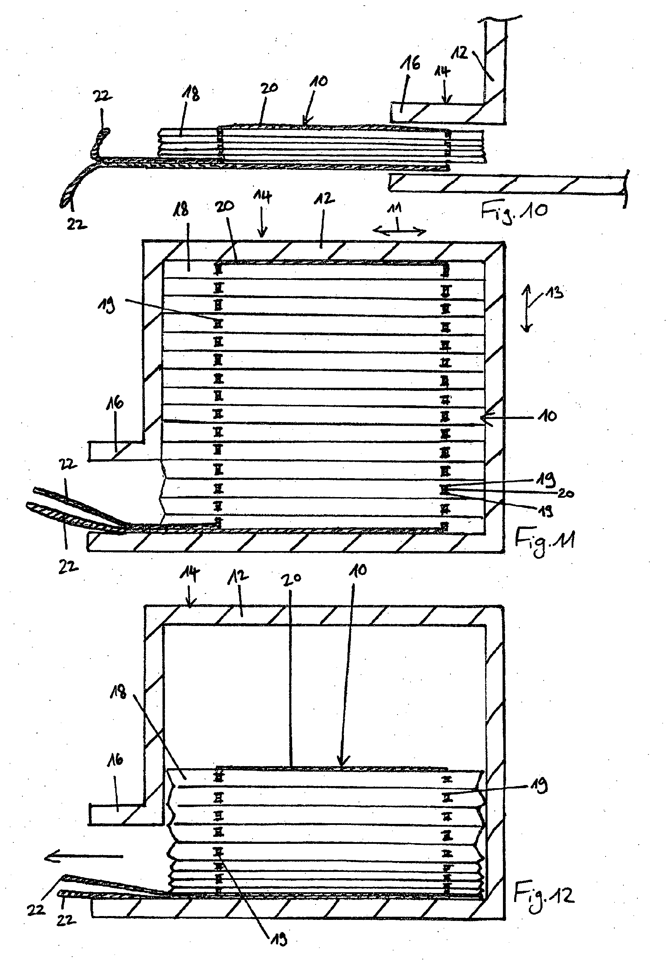

Des Weiteren ist in Fig. 10 eine vierte Ausführungsform des Filterelements 10 gezeigt. Das Filterelement 10 bzw. sein Filter 18 ist dabei in Längsrichtung 11 gefaltet, d.h. die Falten verlaufen entlang der Längsrichtung 11. Das Filterelement 10 weist dabei ein Band 20 auf, das in zwei Bahnen in Breitenrichtung 13 durch das Filterelement 10 hindurch verläuft. Das Band 20 wird dabei durch entsprechende Öffnungen 19 in dem Filterelement 10 hindurchgeführt. Alternativ kann das Band 20 auch auf der Vorder- und/oder Rückseite der Faltung des Filterelements 10 entsprechend aufgeklebt sein. Das Band 20 kann dabei umlaufend vorgesehen sein, wie in Fig. 11 gezeigt ist, oder es können alternativ zwei separate Bänder 20 an dem Filterelement 10 befestigt sein (nicht dargestellt). Zum Einführen durch die Zugangsöffnung 16 wird das Filterelement 10 zunächst in der Breitenrichtung 13 komprimiert, indem das Filterelement 10 über das Band 20 zusammengezogen bzw. komprimiert wird, um durch die Zugangsöffnung 16 in den Aufnahmeraum 12 eingeführt zu werden.

In Fig. 11 ist das erfindungsgemäße Filtermodul 14 gezeigt, wobei sich das Filterelement 10 in eingebautem Zustand befindet. Nachdem das Band 20 locker gelassen wird und dadurch keine Kompressionskraft mehr wirkt, dehnt sich das Filterelement 10 aufgrund seiner Elastizität innerhalb des Aufnahmeraums 12 wieder aus. Das Filterelement 10 liegt dabei an der Innenumfangsfläche des Aufnahmeraums 12 an.

Fig. 12 zeigt das Filtermodul 14, wobei das Filterelement 10 aus dem Aufnahmeraum 12 entfernt wird. Zum erneuten Komprimieren des Filterelements 10 wird dabei an den beiden Laschen 22 des Bandes 20 in Pfeilrichtung gezogen. Dadurch kann das Filterelement 10 sehr einfach zusammengefaltet und komprimiert werden. Das Filterelement 10 lässt sich dadurch ohne Beschädigung bequem durch die Zugangsöffnung 16 entfernen.

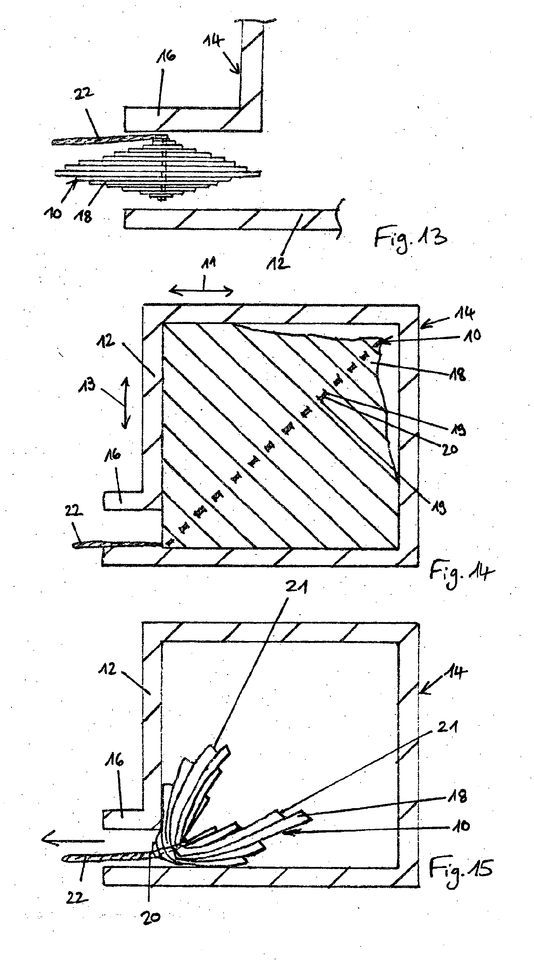

In einer weiteren alternativen Ausführungsform, wie in Fig. 13 gezeigt ist, kann das Filterelement 10 bzw. sein Filter 18 statt beispielsweise in Längs- oder Breitenrichtung 11, 13 diagonal gefaltet sein. Dabei kann wenigstens ein Band 20 beispielsweise in einer Ecke des Filterelements 10 befestigt sein und durch entsprechende Öffnungen 19 quer zu der Faltung zu der gegenüberliegenden Ecke des Filterelements 10 geführt werden. Alternativ können aber auch beispielsweise zwei Bänder 20 vorgesehen sein, die rechts und links von der oberen Ecke angeordnet sind und in einer Diagonalen jeweils in Richtung der gegenüberliegenden Ecke verlaufen.

Das Filterelement 10 wird dabei, wie in Fig. 13 gezeigt ist, quer zur Faltung komprimiert, bevor es in die Zugangsöffnung 16 des Aufnahmeraums 12 eingeführt wird.

In Fig. 14 ist das Filtermodul 14 in einer Querschnittsansicht gezeigt, wobei das Filterelement 10, wenn das Band 20 locker gelassen wird, sich aufgrund seiner Elastizität in dem Aufnahmeraum 12 ausdehnt.

Zum Entfernen wird, wie in Fig. 15 gezeigt ist, an der Lasche 22 des Bandes 20 in Pfeilrichtung gezogen. Dabei wird das Filterelement 10 komprimiert und die beiden Enden 21 aufeinander gefaltet, so dass das Filterelement 10 leicht aus der Zugangsöffnung 16 entnommen werden kann.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Die vorliegende Erfindung ist insbesondere nicht auf die in den obigen Ausführungsbeispielen beschriebenen Ausführungsformen und Varianten beschränkt. Insbesondere ist die vorliegende Erfindung nicht auf die Art wie das Filterelement 10 gefaltet wird beschränkt. Die zuvor beschriebenen Ausführungsformen stellen lediglich einige exemplarische Beispiele dar.

Des Weiteren ist die Erfindung nicht auf die Anzahl, Anordnung und Art der Befestigung des Bandes 20 bzw. der Bänder 20 beschränkt, wie sie in den Ausführungsbeispielen beschrieben sind.

Außerdem ist die Erfindung nicht nur auf Filter 18 zu Filterung von gasförmigen Medien beschränkt, sondern lässt sich sehr vorteilhaft auch für Filter zur Filterung von Flüssigkeiten einsetzen. Auch ist die Erfindung nicht notwendigerweise auf Filter 18 für den Kraftfahrzeugbereich beschränkt, sondern kann bei beliebigen Anwendungen, in denen Filter zum Einsatz kommen, ebenfalls vorteilhaft eingesetzt werden.

Des Weiteren ist die Darstellung der Dicke des Filtermaterials in den Figuren nicht maßstäblich. Tatsächlich kann das Filtermaterial eine beliebige für den jeweiligen Einsatzzweck geeignete Dicke aufweisen. Mit anderen Worten, das Filtermaterial kann eher etwas dünner sein, wie in den Figuren beispielhaft angedeutet ist, oder auch erheblich dicker ausgebildet sein.

Bei den zuvor beschriebenen Ausführungsformen kann des Weiteren neben der Zugangsöffnung 16 wenigstens eine weitere Öffnung in dem Aufnahmeraum 12 vorgesehen sein, durch die das Filterelement 10 eingeführt und/oder entfernt werden kann. Hierzu kann für die Öffnungen wahlweise jeweils ein entsprechendes Band 20 mit einer Lasche 22 oder einer Schlaufe 24 vorgesehen sein, so dass das Filterelement 10 von jeder der Öffnungen aus leicht eingeführt und/oder entnommen werden kann. Die Position der Zugangsöffnung 16 bzw. der zusätzlichen Öffnungen kann an einer beliebigen, für den Einbau bzw. die Entnahme des Filterelements 10, geeigneten Stelle des Filtermoduls 14 vorgesehen sein.

Weiter kann die Aufnahmekammer 12 neben einem viereckigen Querschnitt, wie er beispielsweise in den Fig. 2, 4 und 5 dargestellt ist, einen beliebigen Querschnitt aufweisen, beispielsweise einen kreisförmigen, ovalen, dreieckigen oder vieleckigen Querschnitt. Das Filterelement 10 ist in seiner Form bzw. seinem Querschnitt an den jeweiligen Querschnitt des Aufnahmeraums 12 vorzugsweise angepasst.

## Patentansprüche

1. Filtermodul (14), welches ein Filterelement (10), eine Zugangsöffnung (16) und einen Aufnahmeraum (12) zur Aufnahme des Filterelements (10) aufweist,
- wobei das Filterelement (10) in seinem Ursprungszustand einen größeren Querschnitt als die Zugangsöffnung (16) aufweist,
- wobei das Filterelement (10) geeignet komprimierbar ist, so dass das Filterelement (10) durch die Zugangsöffnung (16) in den Aufnahmeraum (12) eingeführt werden kann, und
- wobei das Filterelement (10) ausreichend elastisch ausgebildet ist, so dass es sich nach der Komprimierung wieder ausdehnt, **dadurch gekennzeichnet, dass**
- an dem Filter (18) wenigstens ein Band (20) vorgesehen ist, das wenigstens eine Lasche (22) und/oder eine Schlaufe (24) bildet, zum Entfernen des Filterelements (10) aus dem Aufnahmeraum (12) und das Filterelement (10) einen Filter (18) aufweist, der entlang seiner Längsrichtung oder Breitenrichtung oder Diagonale eine zickzackförmige bzw. ziehharmonikaförmige und/oder wellenförmige Faltung aufweist,
- wobei die Lasche (22) und/oder die Schlaufe (24) greifbar in der Zugangsöffnung (16) angeordnet ist und das Filterelement (10) durch das Band aus dem Aufnahmeraum (12) herausgezogen werden kann.

2. Filtermodul nach Anspruch 1, **dadurch gekennzeichnet, dass** das Filterelement (10) in der Längs- und/oder Breitenrichtung und/oder in der Querrichtung komprimierbar ist.

3. Filtermodul nach Anspruch 1 oder 2, **dadurch gekennzeichnet, dass** das Filterelement (10) an dem Innenumfang des Aufnahmeraums (12) zumindest teilweise oder vollumfänglich vorzugsweise abdichtend anliegt.

4. Filtermodul nach einem der vorhergehenden Ansprüche, **dadurch gekennzeichnet, dass** das Band (20) an wenigstens einer Längsseite und/oder Breitenseite und/oder Diagonale des Filters (18) befestigt ist.

5. Filtermodul nach einem der vorhergehenden Ansprüche, **dadurch gekennzeichnet, dass** wenigstens ein Band (20) quer und/oder längs zu der Faltrichtung des Filters (18) an dessen Vorder- und/oder Rückseite befestigt ist.

6. Filtermodul nach einem der vorhergehenden Ansprüche, **dadurch gekennzeichnet, dass** wenigstens ein Band (20) durch entsprechende Öffnungen (19) in dem Filter (18) quer und/oder längs zu dessen Faltrichtung hindurchgeführt ist.

7. Verfahren zum Befestigen eines Filterelements (10) in einem Filtermodul (14), welches ein Filterelement (10), eine Zugangsöffnung (16) und einen Aufnahmeraum (12) zur Aufnahme des Filterelements (10) aufweist,
- wobei das Filterelement (10) in seinem Ursprungszustand einen größeren Querschnitt als die Zugangsöffnung (16) aufweist,
- wobei das Filterelement (10) geeignet komprimierbar ist, so dass das Filterelement (10) durch die Zugangsöffnung (16) in den Aufnahmeraum (12) eingeführt werden kann, und
- wobei das Filterelement (10) ausreichend elastisch ausgebildet ist, so dass es sich nach der Komprimierung wieder ausdehnt,
- wobei an dem Filter (18) wenigstens ein Band (20) vorgesehen ist, das wenigstens eine Lasche (22) und/oder eine Schlaufe (24) bildet, zum Entfernen des Filterelements (10) aus dem Aufnahmeraum (12) und das Filterelement (10) einen Filter (18) aufweist, der entlang seiner Längsrichtung oder Breitenrichtung oder Diagonale eine zickzackförmige bzw. ziehharmonikaförmige und/oder wellenförmige Faltung aufweist,
wobei das Verfahren umfasst:
- Komprimieren des Filterelements (10), um das Filterelement (10) durch eine Zugangsöffnung (16) in einen Aufnahmeraum (12) des Filtermoduls (14) einzuführen, und
- Ausdehnen des Filterelements (10) in dem Aufnahmeraum (12),
**dadurch gekennzeichnet, dass** zum Komprimieren und/oder Ausdehnen des Filterelements (10) zusätzlich wenigstens ein Band (20) an dem Filterelement (10) vorgesehen ist.

8. Verfahren nach Anspruch 7, **dadurch gekennzeichnet, dass** das Filterelement (10) quer zu der Faltrichtung komprimiert wird, um durch die Zugangsöffnung (16) in das Filtermodul (14) eingeführt zu werden.

9. Verfahren nach Anspruch 8, **dadurch gekennzeichnet, dass** im Anschluss an den Schritt des Komprimierens des Filterelements (10) quer zur Faltrichtung, beide Enden (21) des Filterelements (10) aufeinander gefaltet werden, um das Filterelement (10) durch die Zugangsöffnung (16) in das Filtermodul (14) einzuführen.

10. Verfahren nach einem der Ansprüche 7 bis 9, **dadurch gekennzeichnet, dass** das Filterelement (10) zum Entfernen aus dem Aufnahmeraum (12) des Filtermoduls (14) zumindest teilweise quer und/oder längs zur Faltrichtung komprimiert wird.

11. Verfahren nach Anspruch 10, **dadurch gekennzeichnet, dass** die Enden (21) des Filterelements (10), zum Entfernen aus dem Aufnahmeraum (12), zusätzlich aufeinander gefaltet werden.

12. Verfahren nach einem der Ansprüche 7 bis 11, **dadurch gekennzeichnet, dass** das Filterelement (10) in der Längs- und/oder Breitenrichtung und/oder in der Querrichtung komprimierbar ist.

13. Verfahren nach einem der Ansprüche 7 bis 12, **dadurch gekennzeichnet, dass** das Filterelement (10) an dem Innenumfang des Aufnahmeraums (12) zumindest teilweise oder vollumfänglich vorzugsweise abdichtend anliegt.

14. Verfahren nach einem der Ansprüche 7 bis 13, **dadurch gekennzeichnet, dass** das Band (20) an wenigstens einer Längsseite und/oder Breitenseite und/oder Diagonale des Filters (18) befestigt ist.

15. Verfahren nach einem der Ansprüche 7 bis 14, **dadurch gekennzeichnet, dass** wenigstens ein Band (20) quer und/oder längs zu der Faltrichtung des Filters (18) an dessen Vorder- und/oder Rückseite befestigt ist.

16. Verfahren nach einem der Ansprüche 7 bis 15, **dadurch gekennzeichnet, dass** wenigstens ein Band (20) durch entsprechende Öffnungen (19) in dem Filter (18) quer und/oder längs zu dessen Faltrichtung hindurchgeführt ist.

## Claims

1. Filter module (14) which features a filter element (10), an access opening (16), and a receiving space (12) for accommodating the filter element (10),
- wherein the filter element (10) features in its original state a larger cross-section than the access opening (16),
- wherein the filter element (10) can be compressed, so that the filter element (10) can be inserted through the access opening (16) into the receiving space (12), and
- wherein the filter element (10) is sufficiently resilient, so that it expands again after the compression, **characterized in that**
- at the filter (18) is provided at least one band (20), which forms at least one buttstrap (22) and/or one soft eye (24) for removing the filter element (10) from the receiving space (12) and the filter element (10) features a filter (18) which has along its longitudinal direction or width direction or diagonal a zigzag or accordion-shaped and/or wave-shaped folding,
- wherein the buttstrap (22) and/or the soft eye (24) is grippably disposed in the access opening (16) and the filter element (10) can be pulled out of the receiving space (12) by the band.

2. Filter module according to claim 1, **characterized in that** the filter element (10) is compressible in the longitudinal and/or width direction and/or cross-direction.

3. Filter module according to claim 1 or 2, **characterized in that** the filter element (10) is preferably in sealing contact at least partially or completely at the inner periphery of the receiving space (12).

4. Filter module according to one of the above claims, **characterized in that** the band (20) is attached to at least one longitudinal side and/or width side and/or diagonal of the filter (18).

5. Filter module according to one of the above claims, **characterized in that** at least one band (20) is attached transversely and/or longitudinally with respect to the folding direction of the filter (18) to its front side and/or backside.

6. Filter module according to one of the above claims, **characterized in that** at least one band (20) is passed through corresponding openings (19) in the filter (18) transversely and/or longitudinally with respect to its folding direction.

7. Method for attaching a filter element (10) in a filter module (14) which features a filter element (10), an access opening (16), and a receiving space (12) for accommodating the filter element (10),
- wherein the filter element (10) features in its original state a larger cross-section than the access opening (16),
- wherein the filter element (10) can be compressed, so that the filter element (10) can be inserted through the access opening (16) into the receiving space (12), and
- wherein the filter element (10) is sufficiently resilient, so that it expands again after the compression, **characterized in that**
- at the filter (18) is provided at least one band (20), which forms at least one buttstrap (22) and/or one soft eye (24) for removing the filter element (10) from the receiving space (12) and the filter element (10) features a filter (18) which has a zigzag or accordion-shaped and/or wave-shaped fold along its longitudinal direction or width direction or diagonal,
wherein the method includes:
- compressing the filter element (10) in order to pass the filter element (10) through the access opening (16) into a receiving space (12) of the filter module (14), and
- extending the filter element (10) in the receiving space (12),
**characterized in that** at least a band (20) is additionally provided at the filter element (10) for compressing and/or extending the filter element (10).

8. Method according to claim 7, **characterized in that** the filter element (10) is compressed transversely with respect to the folding direction in order to be inserted through the access opening (16) into the filter module (14).

9. Method according to claim 8, **characterized in that** following the step of compressing the filter element (10) transversely with respect to the folding direction, both ends (21) of the filter element (10) are folded on top of each other in order to insert the filter element (10) through the access opening (16) into the filter module (14).

10. Method according to one of the claims 7 to 9, **characterized in that** the filter element (10) for removing from the receiving space (12) of the filter module (14) is at least partially compressed transversely and/or longitudinally with respect to the folding direction.

11. Method according to claim 10, **characterized in that** the ends (21) of the filter element (10), for removing from the receiving space (12), are additionally folded on top of each other.

12. Method according to claim 11, **characterized in that** the filter element (10) is compressible in the longitudinal and/or width direction and/or cross-direction.

13. Method according to one of the claims 7 to 12, **characterized in that** the filter element (10) lies against the inner circumference of the receiving space (12) at least partially or completely, preferably in a sealing manner.

14. Method according to one of the claims 7 to 13, **characterized in that** the band (20) is fixed to at least one longitudinal side and/or width side and/or diagonal of the filter (18).

15. Method according to one of the claims 7 to 14, **characterized in that** at least one band (20) is fixed transversely and/or longitudinally to the folding direction of the filter (18) at its front and/or back side.

16. Method according to one of the claims 7 to 15, **characterized in that** at least one band (20) is passed through corresponding openings (19) in the filter (18) transversely and/or longitudinally to its folding direction.

## Revendications

1. Module filtrant (14) présentant un élément filtrant (10), une ouverture d'accès (16) et un logement (12) permettant de réceptionner l'élément filtrant (10),
- l'élément filtrant (10) présentant, dans son état d'origine, une section supérieure à l'ouverture d'accès (16),
- l'élément filtrant (10) se prêtant à être comprimé de manière à ce que l'élément filtrant (10) puisse être introduit, à travers l'ouverture d'accès (16), dans le logement (12), et
- l'élément filtrant (10) étant exécuté de façon suffisamment élastique pour se dilater à nouveau après avoir été comprimé, **caractérisé en ce qu'**au moins une bande (20) qui forme au moins une patte (22) et/ou une boucle (24) est prévue sur le filtre (18), cette bande servant à retirer l'élément filtrant (10) du logement (12) et l'élément filtrant (10) est pourvu d'un filtre (18) qui présente un pli en zigzag ou en accordéon et/ou ondulé dans le sens de la longueur ou dans le sens de la largeur et/ou en sens diagonal,
- dans lequel la patte (22) et/ou la boucle (24) est disposée de manière saisissable dans l'ouverture d'accès (16) et l'élément de filtre (10) peut être tiré hors du logement (12) par la bande.

2. Module filtrant selon la revendication 1, **caractérisé en ce que** l'élément filtrant (10) peut être comprimé dans le sens de la longueur et/ou dans le sens de la largeur et/ou en sens transversal.

3. Module filtrant selon la revendication 1 ou 2, **caractérisé en ce que** l'élément filtrant (10) est appliqué, au moins en partie ou en totalité, de préférence de manière étanche, sur la circonférence intérieure du logement (12).

4. Module filtrant selon l'une des revendications précédentes, **caractérisé en ce que** la bande (20) est fixée au moins sur un côté longitudinal et/ou sur la diagonale du filtre (18).

5. Module filtrant selon l'une des revendications précédentes, **caractérisé en ce qu'**au moins une bande (20) est fixée sur la face avant et/ou sur la face arrière du filtre, en travers et/ou en sens longitudinal par rapport au sens de pliage du filtre (18).

6. Module filtrant selon l'une des revendications précédentes, **caractérisé en ce qu'**au moins une bande (20) est acheminée à travers des ouvertures correspondantes (19) ménagées dans le filtre (18), en travers et/ou en sens longitudinal par rapport au sens de pliage du filtre.

7. Procédé de fixation d'un élément filtrant (10) présentant un élément filtrant (10), une ouverture d'accès (16) et un logement (12) permettant de réceptionner l'élément filtrant (10),
- l'élément filtrant (10) présentant, dans son état d'origine, une section supérieure à l'ouverture d'accès (16),
- l'élément filtrant (10) se prêtant à être comprimé de manière à ce que l'élément filtrant (10) puisse être introduit, à travers l'ouverture d'accès (16), dans le logement (12), et
- l'élément filtrant (10) étant exécuté de façon suffisamment élastique pour se dilater à nouveau après avoir été comprimé, **caractérisé en ce qu'**au moins une bande (20) qui forme au moins une patte (22) et/ou une boucle (24) est prévue sur le filtre (18), cette bande servant à retirer l'élément filtrant (10) du logement (12) et l'élément filtrant (10) est pourvu d'un filtre (18) qui présente un pli en zigzag ou en accordéon et/ou ondulés dans le sens de la longueur ou dans le sens de la largeur et/ou en sens diagonal,
le procédé comprenant les opérations suivantes:
- compression de l'élément filtrant (10) en vue d'introduire l'élément filtrant (10), à travers une ouverture d'accès (16), dans un logement (12) du module filtrant (14), et
- dilatation de l'élément filtrant (10) dans le logement (12),
**caractérisé en ce qu'**au moins une bande (20) est prévue, en complément, sur l'élément filtrant (10) pour la compression et/ou la dilatation de l'élément filtrant (10).

8. Procédé selon la revendication 7, **caractérisé en ce que** l'élément filtrant (10) est comprimé en travers du sens de pliage afin d'être introduit, à travers l'ouverture d'accès (16), dans le module filtrant (14).

9. Procédé selon la revendication 8, **caractérisé en ce qu'**après l'opération de compression de l'élément filtrant (10) en travers du sens de pliage, les deux extrémités (21) de l'élément filtrant (10) sont pliées l'une sur l'autre dans l'objectif d'introduire l'élément filtrant (10), à travers l'ouverture d'accès (16), dans le module filtrant (14).

10. Procédé selon l'une des revendications 7 à 9, **caractérisé en ce que** l'élément filtrant (10) est comprimé, au moins en partie, en travers et/ou en sens longitudinal par rapport au sens de pliage afin d'être retiré du logement (12) du module filtrant (14).

11. Procédé selon la revendication 10, **caractérisé en ce que** les extrémités (21) de l'élément filtrant (10) sont également pliées l'une sur l'autre afin de retirer l'élément filtrant du logement (12).

12. Procédé selon l'une des revendications 7 à 11, **caractérisé en ce que** l'élément filtrant (10) est compressible dans le sens de la longueur et/ou de la largeur et/ou dans le sens transversal.

13. Procédé selon l'une des revendications 7 à 12, **caractérisé en ce que** l'élément filtrant (10) s'appuie sur la circonférence intérieure du logement (12), au moins partiellement ou complètement, de préférence de manière étanche.

14. Procédé selon l'une des revendications 7 à 13, **caractérisé en ce que** la bande (20) est fixée sur au moins un côté longitudinal et/ou un côté en largeur et/ou une diagonale du filtre (18).

15. Procédé selon l'une des revendications 7 à 14, **caractérisé en ce qu'**au moins une bande (20) est fixée transversalement et/ou longitudinalement à la direction de pliage du filtre (18) sur sa face avant et/ou arrière.

16. Procédé selon l'une des revendications 7 à 15, **caractérisé en ce qu'**au moins une bande (20) est passée à travers des ouvertures correspondantes (19) du filtre (18) transversalement et/ou longitudinalement à sa direction de pliage.
